(19) Europäisches Patentamt
European Patent Office
Office européen des brevets

(11) **EP 0 910 888 B1**

(12) **EUROPÄISCHE PATENTSCHRIFT**

(45) Veröffentlichungstag und Bekanntmachung des Hinweises auf die Patenterteilung:
**02.10.2002 Patentblatt 2002/40**

(21) Anmeldenummer: 97931779.9

(22) Anmeldetag: **04.07.1997**

(51) Int Cl.[7]: **H02K 3/28**

(86) Internationale Anmeldenummer:
**PCT/EP97/03551**

(87) Internationale Veröffentlichungsnummer:
**WO 98/001931 (15.01.1998 Gazette 1998/02)**

(54) **GENERATORSCHALTUNG**

CIRCUIT FOR A GENERATOR

CIRCUIT POUR UN GENERATEUR

(84) Benannte Vertragsstaaten:
**AT BE CH DE DK ES FI FR GB GR IE IT LI LU MC NL PT SE**

(30) Priorität: **10.07.1996 DE 19627816**

(43) Veröffentlichungstag der Anmeldung:
**28.04.1999 Patentblatt 1999/17**

(73) Patentinhaber: **Ficht GmbH & Co. KG**
**85614 Kirchseeon (DE)**

(72) Erfinder: **BARTSCH, Knut**
**D-85560 Ebersberg (DE)**

(74) Vertreter: **Solf, Alexander, Dr.**
**Patentanwälte**
**Dr. Solf & Zapf**
**Candidplatz 15**
**81543 München (DE)**

(56) Entgegenhaltungen:
**WO-A-96/23350          US-A- 3 800 197**
**US-A- 4 163 187          US-A- 4 175 249**
**US-A- 4 375 593          US-A- 4 456 870**
**US-A- 5 276 603          US-A- 5 500 052**

**Beschreibung**

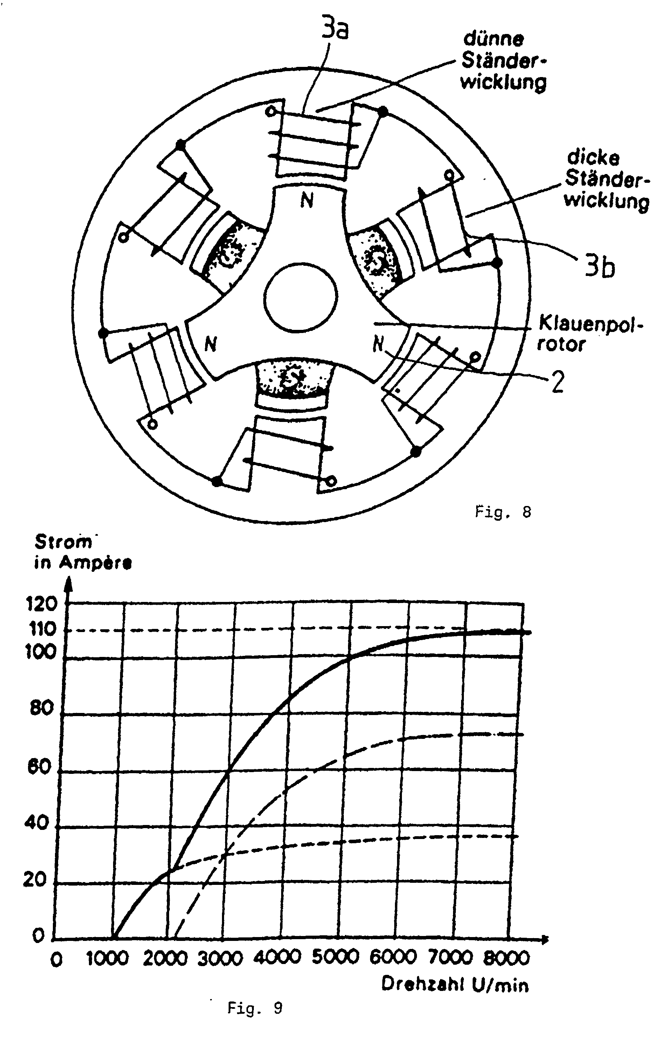

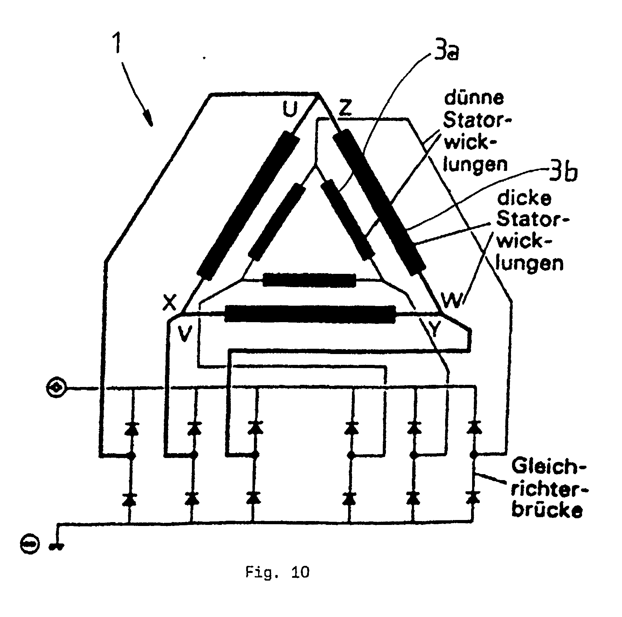

Es ist ein Hochleistungsgenerator bekannt, der schematisch vereinfacht in Fig. 8 und Fig. 10 dargestellt ist. Dieser Generator weist einen sechspoligen Stator 1 und einen fremderregten Rotor 2 auf. An den Polen des Stators 1 sind Statorspulen 3a, 3b angeordnet, in welche bei einer Drehbewegung des Rotors eine Spannung induziert wird. Es sind zwei Arten von Statorspulen 3a, 3b vorgesehen, nämlich erste Statorspulen 3a mit dünnem Draht und vielen Wicklungen und zweite Statorspulen 3b mit dickem Draht und halb so vielen Wicklungen wie die ersten Statorspulen 3a.

Die ersten Statorspulen 3a sind so dimensioniert, daß ihre Stromabgabe bei etwa 1000 U/min. einsetzt. Aufgrund ihrer Abmessungen und ihrer Windungszahl ist ihre Stromabgabe auf etwa 35 A bei 8000 U/min begrenzt (gestrichelte Linie in Fig. 9).

Die zweiten Statorspulen 3b beginnen erst bei etwa 2000 U/min. Strom abzugeben, sind aber für eine hohe Stromabgabe ausgelegt. Bei voller Erregung lassen sie bei etwa 8000 U/min. einen Stromfluß bis zu 75 A zu.

Die einzelnen Spulentypen sind, wie das in Fig. 10 gezeigte Schaltschema zeigt, parallel geschaltet, so daß sich in den beiden Statorspulentypen 3a, 3b erzeugten Ströme addieren. Mit diesem Generator kann somit eine maximale Stromabgabe von 35 A + 75 A, also insgesamt von 110 A erzielt werden.

Dieser Generator erreicht bei geringer Baugröße eine hohe Leistung, wobei im Betrieb bis zu etwa 60 Ampère nur eine relativ geringe Erwärmung auftritt, da die zweiten Statorspulen 3b nur mit dem halben Maximalstrom belastet werden.

Für Drehzahlen unter 1000 U/min ist dieser Generator ungeeignet, da die erzeugte Spannung so gering ist, daß an den Verbrauchern kein nennenswerter Stromfluß auftreten kann. Würde man die ersten Statorspulen 3a so auslegen, daß sie bei Drehzahlen von beispielsweise 500 U/min eine ausreichende Spannungsabgabe bewirken würden, so müßte ihre Windungszahlen deutlich erhöht werden und ein entsprechend dünnerer Draht verwendet werden. Hierdurch würde sich der Grenzstrom drastisch vermindern und diese Spulen würden im Normalbetrieb keinen nennenswerten Beitrag zum Gesamtstrom abgeben.

Bei Motoren mit Handstarteinrichtung, wie z.B. Bootsmotoren, treten während der Startphase sehr geringe Drehzahlen von beispielsweise 150 U/min auf. Derartige "kleine" Motoren sind mit elektronischen Steuereinrichtungen bzw. Einspritzvorrichtungen ausgestattet, so daß selbst bei Verwendung von Handstarteinrichtungen Batterien vorgesehen werden müssen, da bekannte Generatoren ab 150 U/min keine ausreichend hohe Spannung von etwa 10 Volt erzeugen, um diese elektrische Einrichtungen, insbesondere Einspritzvorrichtungen, betreiben zu können.

Würde man einen solchen Generator so auslegen, daß er bereits bei 150 U/min eine Spannung von 10 Volt erzeugt, würde er zwar bei niedrigen Drehzahlen eine geeignete Spannung liefern. Da die abgegebene Spannung jedoch proportional zur Drehzahl ist, würde beispielsweise bei 6500 U/min eine Spannung von 430 Volt erzeugt werden. Bauteile für solch hohe Spannungen sind sehr teuer. Bei Generatoren für Kraftfahrzeuge wird die Spannung mit einer speziellen Regeleinrichtung auf einen gewünschten Wert geregelt. Ein solcher Spannungsregler bedeutet jedoch einen beträchtlichen technischen und finanziellen Aufwand, insbesondere um derart große Spannungsbereiche zu regeln.

Aus der US 4,163,187 ist ein Generator mit zwei Spulengruppen bekannt, die aus unterschiedlich dicken Drähten mit unterschiedlichen Windungszahlen gewickelt sind. Diese Spulen sind jeweils als Sternwicklung geschaltet und als zwei separate Wicklungsgruppen auf dem Stator angeordnet.

Diese Druckschrift entspricht im Prinzip dem in Fig. 8 und 10 dargestellten und als Stand der Technik beschriebenen Generator.

Aus der US 3,800,197 ist ein Schaltsystem zur Verbindung zweier Wechselstrommaschinen beschrieben, welches diese gleichzeitig in Serie oder parallel schalten kann. Hierzu wird eine Stromabschaltung in den Maschinen vorgesehen. Zur Zustandsüberwachung und zur Ansteuerung von aktiven Schaltelementen, z.B. Thyristoren sind Logikschaltungen vorgesehen.

Aus der 4,175,249 ist ein Solarzellenmodul bekannt, dessen Zellen entweder in Serie oder parallel geschaltet werden können.

Aus der US 4,456,870 ist ein Wechselstromgenerator bekannt, welcher Spulen, die mittels Thyristorschaltelementen von einem parallel in eine Serienschaltung übergeführt werden können.

Der Erfindung liegt die Aufgabe zugrunde, eine Schaltung für einen Generator zu schaffen, die den Betrieb eines Generators schon bei sehr geringen Drehzahlen ermöglicht, wobei auch bei hohen Drehzahlen die durch den Generator erzeugte Spannung mit handelsüblichen Bauteilen bewerkstelligt werden kann. Vorzugsweise soll mit dem erfindungsgemäßen Verfahren ein Generator schon ab Drehzahlen von 150 U/min betrieben werden können. Ferner liegt der Erfindung die Aufgabe zugrunde, eine Schaltung für einen Generator zu schaffen, mit der ein Generator über einen großen Drehzahlbereich und insbesondere bei niedrigen Drehzahlen betrieben werden kann.

Die Aufgabe wird durch eine Schaltung mit den Merkmalen des Anspruchs 1 gelöst. Vorteilhafte Ausgestaltungen sind in den Unteransprüchen angegeben.

Nach der erfindungsgemäßen Schaltung sind Generatorspulen eines Generators bei niedrigen Drehzahlen in Reihe geschaltet, so daß sich die in den Spulen induzierte Spannung addiert. Bei hohen Drehzahlen sind diese Generatorspulen parallel geschaltet, so daß sich die in den Spulen induzierten Ströme addieren und die vom Generator abgegebene Gesamtspannung herabgesetzt wird.

Dieser Übergang von Parallel- in Reihenschaltung ist das wesentliche Prinzip der vorliegenden Erfindung, denn hierdurch kann die abgegebene Spannung einfach in einem gewünschten Bereich gehalten werden.

Die Erfindung wird beispielhaft anhand der Zeichnung näher erläutert. Es zeigen schematisch vereinfacht:

Fig. 1    eine Prinzipskizze für das der erfindungsgemäßen Schaltung zugrundeliegende Winkprinzip

Fig. 2    schematisch den Aufbau einer Gleichstrom-Generatoreinheit,

Fig. 3    eine Schaltung gemäß dem Prinzip nach Fig. 1

Fig. 4    eine modifizierte Schaltung,

Fig. 5    einen Spannungsverlauf bei einem so betriebenen Generator mit vier Schaltungsstufen,

Fig. 6    eine erfindungsgemäße Schaltanordnung ohne aktive Schaltelemente,

Fig. 7    eine weitere erfindungsgemäße Schaltanordnung ohne aktive Schaltelemente,

Fig. 8    schematisch einen Stator und einen Rotor eines bekannten Generators,

Fig. 9    ein Diagramm der Stromabgabe des Generators aus Fig. 8, und

Fig. 10   eine Schaltung, mit der der in Fig. 8 dargestellte Generator betrieben wird.

Mit dem der erfindungsgemäßen Schaltung zugrundeliegenden Prinzip werden Generatoren so betrieben, daß sie ohne einen aufwendigen Spannungsregler eine Ausgangsspannung abgeben, die innerhalb eines vorbestimmten Bereiches liegt.

Generatoren bestehen bekanntlich aus einem stillstehenden Stator 1 und einem sich drehenden Rotor 2. Üblicherweise sind am Stator 1 Generatorspulen 3 angeordnet, in welche bei einer Drehung des Rotors 2 Spannung induziert wird.

Zur einfacheren Veranschaulichung des zugrundeliegenden Prinzips betrachtet man drei zu einer Gleichstrom-Generatoreinheit 4 (Fig. 2) geschaltete Spulen 3 eines Generators.

Die drei Spulen erzeugen jeweils eine Spannung, deren Phasen entsprechend einem Drehstrom um 120° versetzt sind. Die drei Spulen 3 sind an einem an sich bekannten, aus sechs Dioden ausgebildeten Drehstromgleichrichter angeschlossen. Diese Gleichstrom-Generatoreinheit 4 stellt somit eine Gleichstromquelle dar, die im Betrieb des Generators einen Strom $I_{GG}$ bzw. eine Spannung $U_{GG}$ erzeugt.

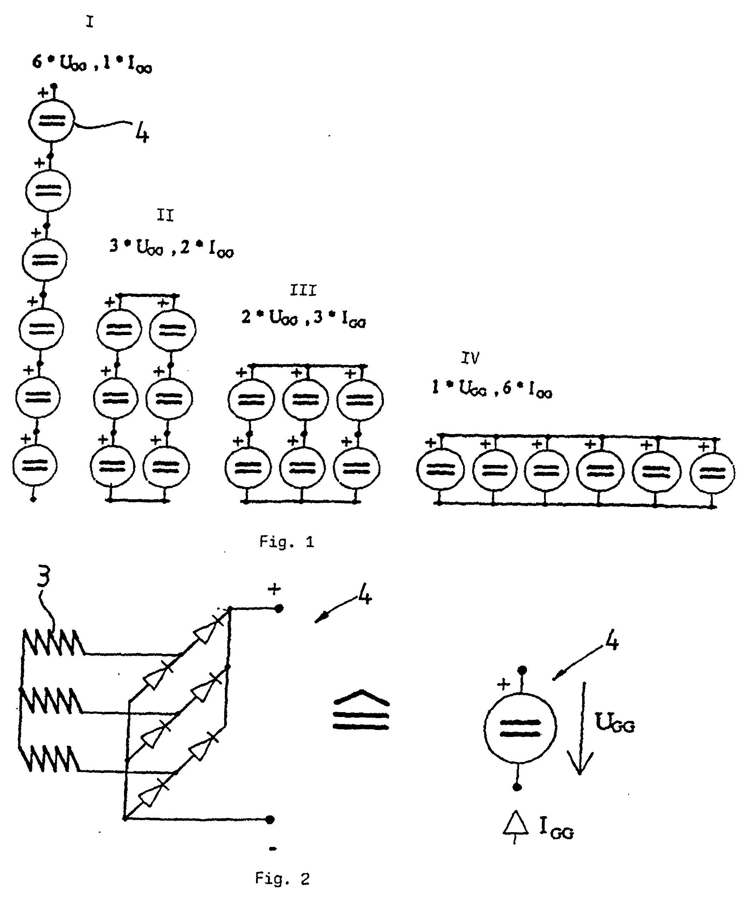

Diese Gleichstrom-Generatoreinheiten 4 werden bei niedrigen Generatordrehzahlen in Reihe geschaltet und bei höheren Drehzahlen stufenweise parallel geschaltet. In Fig. 1 ist das Verfahren anhand von vier Schaltungsstufen I-IV dargestellt, wobei sechs Gleichstrom-Generatoreinheiten 4 gezeigt sind, die bei einer reinen Reihenschaltung (= erste Schaltungsstufe I) aller sechs Gleichstrom-Generatoreinheiten 4 eine Gesamtspannung am Generator von $U_G$ = 6 $U_{GG}$ ergibt.

Steigt die Drehzahl an, mit der der Rotor des Generators gedreht wird, so nimmt auch die in den einzelnen Gleichstrom-Generatoreinheiten 4 erzeugte Spannung zu. Die reine Reihenschaltung der ersten Schaltungsstufe I wird deshalb in eine Parallelschaltung von jeweils drei Gleichstrom-Generatoreinheiten 4 umgeschaltet (= zweite Schaltungsstufe II), so daß die Gesamtspannung zu $U_G$ = 3 $U_{GG}$ wird. Hierdurch wird die mit höheren Drehzahlen ansteigende Spannung der einzelnen Gleichstrom-Generatoreinheiten 4 herabgesetzt.

Bei einem weiteren Spannungsanstieg werden die sechs Gleichstrom-Generatoreinheiten 4 zu je drei Paaren von Gleichstrom-Generatoreinheiten 4 parallel geschaltet (= dritte Schaltungsstufe III). Hierbei ergibt sich eine Gesamtspannung des Generators von $U_G$ = 2 $U_{GG}$.

In einer letzten Schaltungsstufe IV sind alle Gleichstrom-Generatoreinheiten parallel geschaltet, so daß die Gesamtspannung $U_G$ = 1 $U_{GG}$ beträgt.

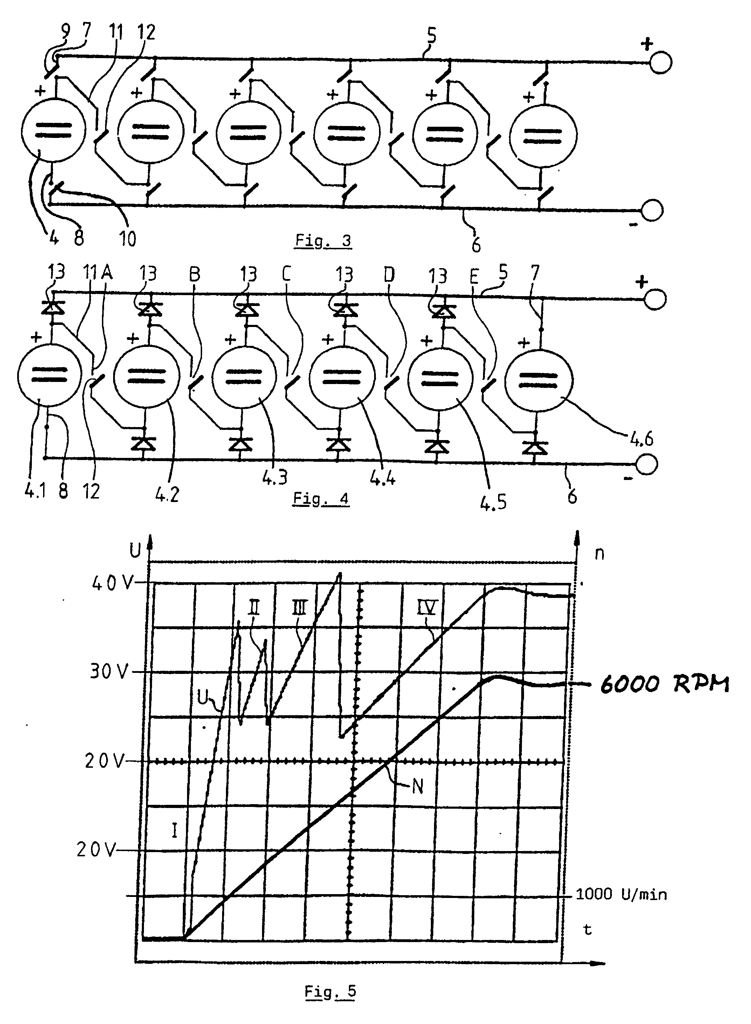

Der Spannungsverlauf U eines Generators, dessen Gleichstrom-Generatoreinheiten 4 bzw. Spulen gemäß den in Fig. 1 dargestellten vier Schaltungsstufen I-IV geschaltet werden, ist in Fig. 5 dargestellt, wobei gleichzeitig die Drehzahl N, mit der der Generator betrieben wird, eingetragen ist.

Der Generator wird, wie in Fig. 1 gezeigt ist, mit vier Schaltungsstufen I-IV betrieben, wobei während der ersten Schaltungsstufe I die Generatorspannung $U_G$ mit zunehmender Drehzahl sehr steil ansteigt, da alle Gleichstrom-Generatoreinheiten 4 in Reihe geschaltet sind. Bei etwa 150 U/min wird bereits eine Spannung von 10 Volt erzielt. Bei einem Spannungswert von etwa 35 Volt wird auf die zweite Schaltungsstufe II umgeschaltet, so daß die Generatorspannung U schlagartig auf etwa 25 Volt abfällt.

Die Spannung steigt dann mit zunehmender Drehzahl wieder an, wobei beispielsweise bei etwa 35 Volt auf die nächste Schaltungsstufe III umgeschaltet wird, wodurch die Spannung des Generators wieder auf einen Wert von etwa 25 Volt abfällt.

Das Umschalten auf die letzte Schaltungsstufe IV erfolgt bei etwa 40 Volt, wodurch die Generatorspannung auf wiederum etwa 25 Volt herabgesetzt wird. Die maximale Spannung von etwa 40 Volt wird etwa bei 6000 U/min erreicht. Somit ist es möglich, durch einfaches Umschalten der Anordnung der Gleichstrom-Generatoreinheiten 4 die Ausgangsspannung eines Generators in einem vorbestimmten Bereich von beispielsweise etwa 20 bis 40 Volt zu halten. Da bei niedrigen Drehzahlen mehrere Gleichstrom-Generatoreinheiten 4 in Reihe geschaltet sind, wird schon bei außergewöhnlich niedrigen Drehzahlen von beispielsweise 150 U/min eine Ausgangsspannung erzielt, die ein Betreiben von elektrischen Geräten, insbesondere Einspritzvorrichtungen bzw. Einspritzpumpen und dergleichen ermöglicht.

Eine für das Verfahren geeignete Schaltung ist in Fig. 3 dargestellt.

Diese Schaltung weist zwei Hauptleitungen 5, 6 auf, zwischen welchen die Gleichstrom-Generatoreinheiten 4 angeordnet sind. Die Gleichstrom-Generatoreinheiten 4 sind mit ihrem positiven Ausgang über jeweils eine Zweigleitung 7 mit der Hauptleitung 5 und mit ihrem negativen Ausgang über jeweils eine Zweigleitung 8 mit der anderen Hauptleitung 6 verbunden.

In den Zweigleitungen 7, 8 sind jeweils Zweigleitungsschalter 9, 10 angeordnet, die den Stromfluß in den einzelnen Zweigleitungen 7, 8 unterbrechen können. Jede Zweigleitung 7, die an einem positiven Ausgang einer Gleichstrom-Generatoreinheit 4 angeschlossen ist, ist über jeweils eine Querverbindungsleitung 11 mit einer Zweigleitung 8 verbunden, die an einem negativen Ausgang einer anderen, vorzugsweise benachbarten Gleichstrom-Generatoreinheit 4 angeordnet ist. Die Querverbindungsleitungen 11 verbinden somit den positiven Ausgang einer Gleichstrom-Generatoreinheit 4 mit dem negativen Ausgang einer anderen, benachbarten Gleichstrom-Generatoreinheit 4. Die Querverbindungsleitungen 11 sind an den Zweigleitungen 7, 8 jeweils im Bereich zwischen den Gleichstrom-Generatoreinheiten 4 und den jeweiligen Zweigleitungsschaltern 9, 10 angeordnet. In den Querverbindungsleitungen 11 ist jeweils ein Schalter 12 angeordnet.

In dieser Schaltung werden jeweils zwei benachbarte Gleichstrom-Generatoreinheiten 4 durch Schließen des dazwischen angeordneten Schalters 12 einer Querverbindungsleitung 11 in Reihe geschaltet, wobei die Zweigleitungsschalter 9, 10 der Zweigleitungen 7, 8, die mit dieser Querverbindungsleitung 11 verbunden sind, geöffnet werden müssen. Auf diese Art und Weise können beliebig viele Gleichstrom-Generatoreinheiten 4 in Reihe geschaltet werden, wobei die in Reihe geschalteten Gleichstrom-Generatoreinheiten 4 an deren äußeren Gleichstrom-Generatoreinheiten 4 mittels zweier Zweigleitungsschalter 9, 10 über die entsprechenden Zweigleitungen 7, 8 mit den Hauptleitungen 5, 6 verbunden werden.

Sind alle Schalter 12 der Querverbindungsleitungen 11 geöffnet und dementsprechend alle Zweigleitungsschalter 9, 10 geschlossen, so sind alle Gleichstrom-Generatoreinheiten 4 parallel geschaltet. Dies entspricht der vierten Schaltungsstufe IV gemäß Fig. 1.

In einer vereinfachten Ausführungsform (Fig. 4) sind alle Zweigleitungsschalter 9, 10 der Zweigleitungen durch Dioden 13 ersetzt. Nur die Zweigleitungen 7, 8 an den äußersten Gleichstrom-Generatoreinheiten 4.1 und 4.6, an welchen keine Querverbindungsleitungen 11 anliegen, sind als durchgehende, schalt- bzw. diodenfreie Leitungen ausgebildet. Die einzelnen Schalter 12 sind durchlaufend mit Buchstaben A bis E gekennzeichnet.

Wird einer der Schalter 12 geschlossen, so werden die benachbart zum Schalter 12 angeordneten Gleichstrom-Generatoreinheiten 4 über die Querverbindungsleitung 11, in der sich der Schalter 12 befindet, in Reihe geschaltet. Das erhöhte Spannungspotential macht die nächstgelegene Diode leitend und erhöht damit die Potentialdifferenz der Hauptleitungen 5, 6. Alle anderen Dioden sperren automatisch. Somit werden alle weiteren Dioden 13 zu passiven Schaltelementen, die weitere Querströme unterbrechen.

Wird der Schalter 12 wieder geöffnet, verläuft der Stromfluß wieder durch die Dioden 13, und die zum Schalter 12 benachbart angeordneten Gleichstrom-Generatoreinheiten 4 sind zwischen den Hauptleitungen 5, 6 parallel geschaltet.

Die Dioden 13 verhindern zudem, daß bei geschlossenem Schalter 12 einzelne Gleichstrom-Generatoreinheiten 4 über eine der Hauptleitungen 5, 6 und eine der Querverbindungsleitungen 11 kurzgeschlossen werden.

In folgender Tabelle sind Schalterzustände der Schalter 12 (A bis E) für die in Fig. 1 gezeigten Schaltungsstufen I bis IV aufgeführt, wobei ein geschlossener Schalter durch "1" und ein geöffneter Schalter durch "O" dargestellt wird:

Tabelle 1

| Schaltungsstufe\Schalter | A | B | C | D | E |
|---|---|---|---|---|---|
| I | 1 | 1 | 1 | 1 | 1 |
| II | 1 | 1 | 0 | 1 | 1 |
| III | 1 | 0 | 1 | 0 | 1 |
| IV | 0 | 0 | 0 | 0 | 0 |

In der Schaltungsstufe I sind alle Schalter A bis E geschlossen, so daß der Stromfluß von der negativen Hauptleitung 6 über die erste Gleichstrom-Generatoreinheit 4.1 über alle Querverbindungsleitungen 11 und die Gleichstrom-Generatoreinheiten 4.2 bis 4.5 bis zur letzten Gleichstrom-Generatoreinheit 4.6 fließt und erst dort in die positive Hauptleitung 5 geleitet wird. Alle Gleichstrom-Generatoreinheiten 4.1 bis 4.6 sind in Reihe geschaltet.

In der zweiten Schaltungsstufe II ist nur der mittlere Schalter C geöffnet, wodurch die Gleichstrom-Generatoreinheiten 4.1 bis 4.3 bzw. 4.4 bis 4.6 in Reihe geschaltet sind und diese beiden Einheiten von in Reihe geschalteten Gleichstrom-Generatoreinheiten zwischen den beiden Hauptleitungen 5, 6 parallel geschaltet sind.

In der dritten Schaltungsstufe III ist jeder zweite Schalter A, C, E geschlossen, so daß die Gleichstromgeneratoreinheit paarweise (4.1, 4.2) (4.3, 4.4), (4.5, 4.6) in Reihe geschaltet sind und diese Paare von Gleichstrom-Generatoreinheiten zwischen den Hauptleitungen 5, 6 parallel geschaltet sind.

In der vierten Schaltungsstufe IV sind alle Schalter geöffnet, so daß alle Gleichstrom-Generatoreinheiten 4.1 bis 4.6 zueinander parallel geschaltet sind.

Die Steuerschaltung zur Ansteuerung der einzelnen Schalter weist einen Spannungskomperator auf, der die durch eine einzige Gleichstrom-Generatoreinheit 4 erzeugte Spannung $U_{GG}$ mißt und an drei digitalen Ausgangskanälen K1, K2, K3 folgende digitale Zustände in Abhängigkeit von der gemessenen Spannung $U_{GG}$ ausgibt:

Tabelle 2

| | K1 | K2 | K3 | Schaltungszustand |
|---|---|---|---|---|
| $U_{GG} < 6,7$ V | 1 | 1 | 1 | I |
| 6,7 V $< U_{GG} \leq 13,3$ V | 0 | 1 | 1 | II |
| 13,3 V $< U_{GG} \leq 20,0$ V | 0 | 0 | 1 | III |
| 20,0 V $< U_{GG}$ | 0 | 0 | 0 | IV |

Die in der Tabelle 2 angegebenen Spannungsbereiche entsprechen den Schaltungszuständen I bis IV, so daß die digitalen Zustände der Kanäle K1 bis K3 durch eine einfache logische Schaltung in die Schaltzustände der einzelnen Schalter A bis E umgesetzt werden können.

Die Logiktabelle, der diese Logikschaltung genügen muß, ist nachfolgend angegeben, wobei die Eingangswerte durch K1, K2 und K3 und die Ausgangswerte durch die Schalterzustände der Schalter A bis E vorgegeben sind:

| K1 | K2 | K3 | = | A | B | C | D | E |
|---|---|---|---|---|---|---|---|---|
| 0 | 0 | 0 | | 0 | 0 | 0 | 0 | 0 |
| 0 | 0 | 1 | | 1 | 0 | 1 | 0 | 1 |
| 0 | 1 | 1 | | 1 | 1 | 0 | 1 | 1 |
| 1 | 1 | 1 | | 1 | 1 | 1 | 1 | 1 |

**Tabelle 3**

Hieraus ergeben sich folgende Gleichungen für die Logikschaltung:

A = K3
B = K2

C = (K1 xor K2) xor K3
D = K2
E = K4

C läßt sich auch durch NAND-Gatter darstellen:
C = (((1 nand K1) nand K2) nand K3) nand 1

Bei der oben dargelegten Beschreibung sind jeweils Gleichstrom-Generatoreinheiten je nach Spannungsbedarf geschaltet worden. Für die Durchführung des Verfahrens ist es jedoch nicht notwendig, Gleichstrom-Generatoreinheiten an einem Generator vorzusehen, sondern es können auch statt der Gleichstrom-Generatoreinheiten Spulen des Generators direkt in Reihe geschaltet werden, sofern diese Spulen Spannungen gleicher oder zumindest ähnlicher Phase erzeugen.

Bei der nachfolgenden Beschreibung der Erfindung werden einzelne Spulen geschaltet, wobei vorausgesetzt wird, daß die Spulen Spannungen ähnlicher Phase erzeugen. Gleichermaßen können die einzelnen Spulen durch Gleichstrom-Generatoreinheiten ersetzt werden, die jeweils beliebige Spulensysteme oder Stromquellen umfassen.

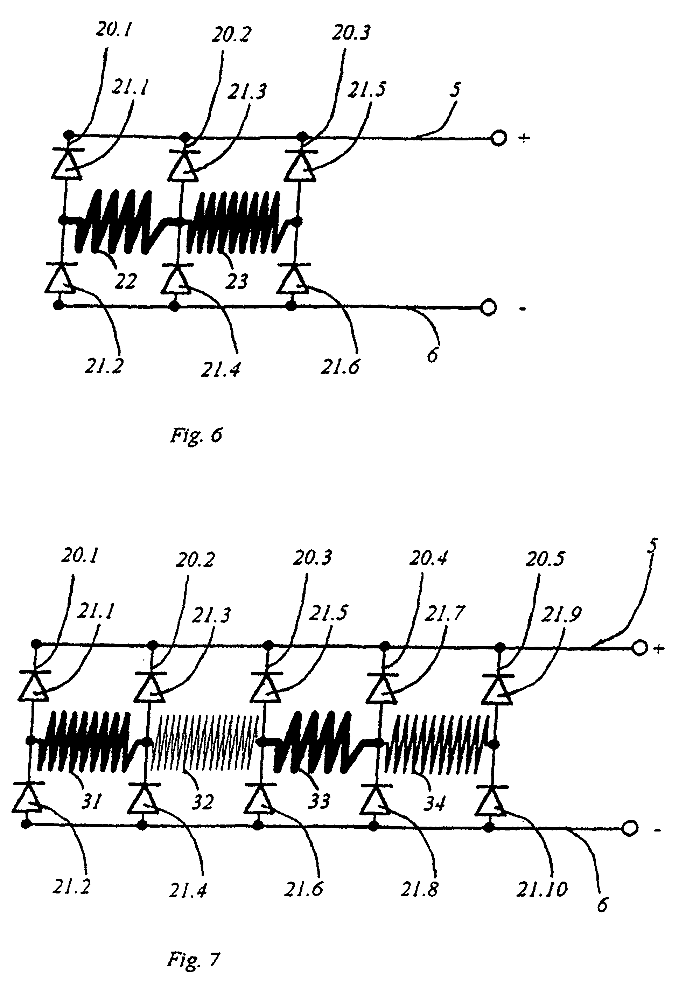

In Fig. 6 ist eine erfindungsgemäße Schaltung dargestellt, die keine aktiven Schalter benötigt.

Diese Schaltung weist wiederum zwei Hauptleitungen 5, 6 auf, zwischen welchen sich mehrere Zweigleitungen 20.1 bis 20.3 erstrecken. In den Zweigleitungen 20.1 bis 20.3 sind jeweils zwei Dioden 21.1 bis 21.6 angeordnet. Zwischen den Zweigleitungen 20.1 bis 20.3 sind jeweils Generatorspulen 22 und 23 angeordnet, in die eine Spannung induziert wird, und die an den Zweigleitungen 20.1 bis 20.3 in den Bereichen zwischen den Dioden 21.1 bis 21.6 angeschlossen sind, wobei die erste Spule 22 zwischen der ersten und zweiten Zweigleitung 20.1, 20.2, die zweite Spule 23 zwischen der zweiten und dritten Zweigleitung 20.2, 20.3 angeordnet ist. Hierdurch bilden die Spulen 22 und 23 eine durchgehende Reihenschaltung.

Die erste Spule 22 ist aus einem relativ starken Draht ausgebildet und weist N-Windungen auf. Die zweite Spule 23 weist 2N-Windungen auf und ist deshalb aus einem etwas dünneren Draht ausgebildet.

Wird der Generator betrieben, so werden in den Spulen 22, 23, 24 jeweils eine Spannung $U_{22}$, $U_{23}$ induziert. Da die Spannungen etwa proportional zur Windungszahl sind, gilt

$$U_{23} = 2U_{22}$$

Wird der Generator bei niedrigen Drehzahlen betrieben, erfolgt ein Stromfluß von der Hauptleitung 6 über die Diode 21.2, die erste Spule 22, die zweite Spule 23 und die Diode 21.5 in die Hauptleitung 5. Die an den Spulen erzeugten Teilspannungen addieren sich, so daß sich eine Gesamtspannung von $U_G = 3U_{22}$ ergibt. Diese Stromwege gelten für die Phase, bei der die in Fig. 6 gezeigten Spulen an der rechten Seite einen positiven Pol und an der linken Seite einen negativen Pol bilden. Für die entgegengesetzte Phase verlaufen die Stromwege über die Diode 21.6, die Spulen 24, 23, 22 und die Diode 21.1. Hierdurch wird in an sich bekannter Weise eine Gleichrichtung erzielt. Zur Vereinfachung wird in der nachfolgenden Beschreibung der Erfindung nur die Phase betrachtet, die auf der rechten Seite der Spulen in der Fig. 6 einen positiven Pol erzeugt.

Wird die Drehzahl des Generators erhöht, so steigt die durch den Generator erzeugte Spannung $U_G$ und der durch die Spulen fließende Strom. Da die Spule 23 aus dünnerem Draht ausgebildet ist, erreicht sie zuerst ihren Grenzstrom, d.h., daß der durch die Spule 23 fließende Strom nicht mehr gesteigert werden kann.

Die Spannung bricht auf Null Volt zusammen und der von Spule 23 erzeugte Strom fließt über die Diode 21.5 auf die Hauptleitung 5, über den Verbraucher zur Hauptleitung 6, über die Diode 21.2 zur Spule 22 und wieder in die Spule 23. Da die dabei entstehende Spannung über der Spule 23 nahezu Null Volt ist, kann die entstehende Verlustleistung als vernachlässigbar gering angesehen werden. Sie berechnet sich wie folgt: $P_V =$

$$I_G * dU_{Diode} + R_{i\,Spule} * I_G^2$$

mit

$P_V =$      Verlustleistung
$I_G =$      Spulengrenzstrom
$dU_{Diode} =$      Diodendifferenzspannung = $D_{Diode\,21.3} - U_{Diode\,21.5}$
$R_{i\,Spule} =$      Spuleninnenwiderstand

Das zugrundeliegende Verfahren wird mit dieser erfindungsgemäßen Schaltung ohne einen aktiven Schalter realisiert. Aktive Schalter sind in der Regel Transistoren, die selbst im durchgeschalteten Zustand einen Spannungsabfall und damit einen Spannungsverlust erzeugen. Bei dieser passiv arbeitenden Schaltung sind bei niedrigen Drehzahlen nur wenige, mit Widerstand behaftete Bauelemente im Stromweg geschaltet, so daß eine maximale Ausgangsspannung erzielt wird. Als Schalter wirken die Spulen selbst, deren Spannung nach dem Erreichen des Grenzstromes zusammenbricht.

Diese Schaltung ist grundsätzlich schon alleine mit zwei unterschiedlichen Spulen möglich, wobei wesentlich ist, daß diese beiden unterschiedlichen Spulen bei geringen Drehzahlen des Generators eine Reihenschaltung bilden, so daß sich deren Spannungen addieren. Hierzu ist es notwendig, daß die beiden unterschiedlichen Spulen in Reihe geschaltet sind, wobei die Enden und die Mitte der Spulen in der Art einer Gleichrichterschaltung über zwei Dioden mit zwei Hauptleitungen verbunden sind.

Die Anzahl der Spulen kann auch beliebig erhöht werden, wobei jeweils Spulen ähnlicher Phase oder Gleichstrom-Generatoreinheiten in dieser Art und Weise verschaltet werden können.

In Fig. 7 ist eine weitere Ausführungsform der erfindungsgemäßen Schaltung schematisch dargestellt.

Sie entspricht im Aufbau der in Fig. 6 gezeigten Schaltung, wobei vier Spulen 31 bis 34 vorgesehen sind, so daß insgesamt fünf Zweigleitungen 20.1 bis 20.5 mit zehn Dioden 21.1 bis 21.10 notwendig sind. Die Spulen 31, 33 sind aus relativ starkem Draht gewickelt und weisen n- und 2n-Windungen auf. Die Spulen 32, 34 sind aus dünnerem Draht ausgebildet und weisen 3n- und 4n-Windungen auf. In dieser Schaltung sind somit Spulen mit kleiner und Spulen mit großer Windungszahl <u>abwechselnd</u> aufeinanderfolgend angeordnet. Bei niedrigen Drehzahlen bilden die vier Spulen eine Reihenschaltung. Bei höheren Drehzahlen erreicht zuerst die Spule 32 mit hoher Windungszahl ihren Grenzstrom, so daß deren Spannung zusammenbricht.

Nach Erreichen des Grenzstromes der Spule 32 mit vielen Wicklungen bildet somit die Spule 31 eine Parallelschaltung mit den in Reihe geschalteten Spulen 33 und 34, wobei gleichzeitig die an den Spulen erzeugte Wechselspannung gleichgerichtet wird. Bei weiter ansteigender Drehzahl und Belastung bricht wieder in bekannter Weise die Spannung über Spule 34 zusammen. Somit sind nur noch Spule 31 und 33 parallel geschaltet und die Spannung befindet sich wieder im gewünschten Bereich.

Mit den in den Fig. 6, 7 dargestellten erfindungsgemäßen Schaltungen läßt sich somit das Verfahren ohne aktive Bauteile realisieren.

Die erfindungsgemäßen Schaltungen weisen gegenüber herkömmlichen Generatoren eine deutlich höhere Effizienz auf, da die Ausgangsspannung des Generators über einen weiten Drehzahlbereich ohne nennenswerte Leistungsverluste in einem geforderten Spannungsbereich gehalten werden kann und der erfindungsgemäße Generator mit steigender Drehzahl immer mehr Strom abgeben kann.

**Patentansprüche**

1. Generator-Schaltung mit Generatorspulen (22,23; 31,32, 33,34) mit unterschiedlichen Windungszahlen, **dadurch gekennzeichnet, daß** mindestens zwei Generatorspulen (22,23; 31 bis 34) in Reihe geschaltet und parallel zu den Generatorspulen zwei Hauptleitungen (5,6) angeordnet sind, wobei jede Generatorspule beidseitig über jeweils eine Zweigleitung (20.1 bis 20.5) mit den Hauptleitungen (5, 6) verbunden ist und nach Art einer Gleichrichterschaltung in den Zweigleitungen jeweils Dioden (21.1 bis 21.10) für einen Stromfluß von der einen Hauptleitung (6) zu der anderen Hauptleitung (5) gleich ausgerichtet sind, und wobei jede Generatorspule sich bezüglich ihres aus der jeweiligen Windungszahl resultierenden Grenzstromes derart von der bzw. jeder benachbarten Generatorspule unterscheidet, daß durch eine Drehzahlerhöhung und einen daraus resultierenden Spannungsanstieg jeweils zuerst die Generatorspule mit der höheren Windungszahl ihren Grenzstrom erreicht und folglich die Spannung an dieser Generatorspule zusammenbricht.

2. Generator-Schaltung nach Anspruch 1, **dadurch gekennzeichnet, daß** mindestens drei, insbesondere vier, Generatorspulen (31 bis 34) derart in Reihe geschaltet sind, daß Spulen (31,33) mit kleinerer Windungszahl und höherem Grenzstrom und Spulen mit größerer Windungszahl (32, 34) und kleinerem Grenzstrom abwechseln aufeinanderfolgend angeordnet sind.

3. Generator-Schaltung nach Anspruch 2, **dadurch gekennzeichnet, daß** zwischen zwei äußeren Spulen (31,33) mit höherem Grenzstrom eine mittlere Spule (32) mit relativ geringerem Grenzstrom angeordnet ist.

4. Generator-Schaltung nach Anspruch 3, **dadurch gekennzeichnet, daß** sich an die eine der beiden äußeren Spulen (31,33) mit höherem Grenzstrom eine weitere Spule (34) in Reihe anschließt, deren Grenzstrom zwischen den Grenzströmen der äußeren Spulen einerseits und der mittleren Spule andererseits liegt.

**5.** Generator-Schaltung nach einem der Ansprüche 1 bis 4,
**dadurch gekennzeichnet, daß** die in Reihe geschalteten Generatorspulen (22,23; 31 bis 34) jeweils Spulen sind, in welchen eine Spannung gleicher Phase induziert wird.

**6.** Generator-Schaltung nach einem der Ansprüche 1 bis 5,
**dadurch gekennzeichnet, daß** die Spulen mit relativ höherer Windungszahl aus relativ dünnerem Draht und die Spulen mit relativ geringerer Windungszahl aus relativ dickerem Draht gewickelt sind.

**7.** Generator-Schaltung nach einem der Ansprüche 1 bis 6,
**dadurch gekennzeichnet, daß** der Generator als selbsterregter, fremderregter oder als gemischt fremd- und selbsterregter Generator ausgebildet ist.

**Claims**

**1.** Generator circuit having generator coils (22, 23; 31, 32, 33, 34) with different numbers of turns,
**characterized in that** at least two generator coils (22, 23; 1 to 34) are connected in series and two main lines (5, 6) are arranged in parallel with generator coils, with each generator coil being connected at both ends via a respective branch line (20.1 to 20.5) to the main lines (5, 6), and diodes (21.1 to 21. 10) in each case being aligned in the same direction for a current flow from the one main line (6) to the other main line (5) like a rectifier circuit in the branch lines, and with each generator coil differing from the or from each adjacent generator coil in terms of its limit current which results from the respective number of turns, such that, as a result of a rotation speed increase and voltage rise resulting from this, that generator coil having the higher number of turns in each case reaches its limit current first and, in consequence, the voltage across this generator coil collapses.

**2.** Generator circuit according to Claim 1,
**characterized in that** at least three, and in particular 4, generator coils (31 to 34) are connected in series such that coils (31, 33) having a relatively small number of turns and a higher limit current and coils having a relatively large number of turns (32, 34) and a lower limit current are arranged such that they alternate successively.

**3.** Generator circuit according to Claim 2,
**characterized in that** a central coil (32) with a relatively low limit current is arranged between two outer coils (31, 33) with a higher limit current.

**4.** Generator circuit according to Claim 3,
**characterized in that** a further coil (34) is connected in series with one of the two outer coils (31, 33) having a higher limit current, and its limit current is between the limit currents of the outer coils on the one hand and of the central coil on the other hand.

**5.** Generator circuit according to one of Claims 1 to 4,
**characterized in that** the series-connected generator coils (22, 23; 31 to 34) are each coils in which a voltage is induced in the same phase.

**6.** Generator circuit according to one of Claims 1 to 5,
**characterized in that** the coils having a relatively high number of turns are wound from relatively thin wire, and the coils having a relatively low number of turns are wound from relatively thick wire.

**7.** Generator circuit according to one of Claims 1 to 6,
**characterized in that** the generator is in the form of a self-excited, externally-excited or mixed externally and self-excited generator

**Revendications**

**1.** Circuit pour un générateur avec des bobinages de générateur (22, 23; 31, 32, 33, 34) présentant des nombres de spires différents, **caractérisé en ce que** deux bobinages de générateur (22, 23; 31 à 34) au moins, sont connectés en série, et que deux conducteurs principaux (5, 6) sont disposés parallèlement aux bobinages de générateur, chaque bobinage de générateur étant relié bilatéralement aux conducteurs principaux (5, 6), chacun par l'intermédiaire d'une dérivation (20.1 à 20.5), et des diodes (21.1 à 21.10) sont chaque fois agencées dans les dérivations, à la manière d'un circuit redresseur, pour assurer le passage d'un courant d'un conducteur principal (6) à l'autre (5), et chaque bobinage de générateur diffère du bobinage de générateur voisin ou de chacun des bobinages de générateur voisins quant à son courant limite résultant du nombre de ses spires en sorte que, à la suite d'une augmentation de la vitesse de rotation et de l'élévation de tension qui en résulte, le bobinage de générateur qui possède le nombre de spires le plus élevé atteigne d'abord son courant limite, et que par conséquent la tension s'effondre sur ce bobinage.

2. Circuit pour un générateur selon la revendication 1,
**caractérisé en ce que** trois bobinages de générateur, au moins, notamment quatre, (31 à 34) sont connectés en série de manière à ce-que des bobinages (31, 33) dont le nombre de spires est plus faible, et le courant limite plus élevé et des bobinages dont le nombre de spires est plus élevé (32, 34), et le courant limite plus faible soient disposés alternativement, les uns derrière les autres.

3. Circuit pour un générateur selon la revendication 2,
**caractérisé en ce qu'**un bobinage médian (32) à courant limite relativement plus faible est disposé entre deux bobinages extérieurs (31, 33) dont le courant limite est plus élevé.

4. Circuit pour un générateur selon la revendication 3,
**caractérisé en ce qu'**un autre bobinage (34) dont le courant limite est situé entre les courants limites des bobinages extérieurs, d'une part, et le courant limite du bobinage médian, d'autre part, est connecté, en série, à la suite de l'un des deux bobinages extérieurs (31, 33).

5. Circuit pour un générateur selon l'une des revendication 1 à 4, **caractérisé en ce que** chacun des bobinages de générateur connectés en série (22, 23; 31 à 34) 34) est un bobinage dans lequel une tension équiphasée est induite

6. Circuit pour un générateur selon l'une des revendications 1 à 5, **caractérisé en ce que** le fil, qui forme les bobinages à nombre de spires relativement plus grand, est relativement plus fin et que celui qui forme les bobinages à nombre de spires relativement plus petit est relativement plus gros.

7. Circuit pour un générateur selon l'une des revendication 1 à 6, **caractérisé en ce que** le générateur est conçu en tant que générateur à auto-excitation, à excitation indépendante ou à auto-excitation et excitation indépendante combinées.

I

$6 * U_{\infty}, 1 * I_{\infty}$

4

II

$3 * U_{\infty}, 2 * I_{\infty}$

III

$2 * U_{\infty}, 3 * I_{\infty}$

IV

$1 * U_{\infty}, 6 * I_{\infty}$

Fig. 1

3

4

$U_{GG}$

$I_{GG}$

4

Fig. 2

10

Fig. 3

Fig. 4

6000 RPM

Fig. 5

Fig. 6

Fig. 7

Fig. 8

Fig. 9

Fig. 10